# EUROPÄISCHE PATENTSCHRIFT

(11) **EP 0 625 485 B1**
(45) Veröffentlichungstag und Bekanntmachung des Hinweises auf die Patenterteilung: **12.08.1998**
(21) Anmeldenummer: 93107506.3
(22) Anmeldetag: 08.05.1993
(51) Int. Cl.: C03B 3/00, C03B 3/02, C03B 1/02, C03C 1/00

(54) **Verfahren zur Herstellung einer silikatischen Schmelze und Vorrichtung zur Durchführung des Verfahrens**
Process for the production of a silicate melt and device for carrying out the process
Procédé pour la production d'un silicate en fusion et appareil pour l'exécution de ce procédé

(43) Veröffentlichungstag der Anmeldung: 23.11.1994
(73) Patentinhaber: Deutsche Rockwool Mineralwoll-GmbH, 45966 Gladbeck (DE)
(72) Erfinder: Berners, Kurt, Dipl.-Ing., W-4390 Gladbeck (DE); Paulitschke, Werner, Dr.rer.nat., W-4044 Kaarst (DE)
(74) Vertreter: Wanischeck-Bergmann, Axel, Dipl.-Ing.

(56) Entgegenhaltungen:
- DE-B- 1 002 923
- US-A- 4 617 045
- US-A- 5 073 183

## Beschreibung

Die Erfindung bezieht sich auf ein Verfahren zur Herstellung einer silikatischen Schmelze aus stückigem Rohmaterial, welche zur Weiterverarbeitung zu Mineralwolle-Dämmstoffen bestimmt ist, und auf eine Vorrichtung zur Durchführung des Verfahrens.

Mineralwolle-Dämmstoffe bestehen aus glasigen Fasern, die aus einer silikatischen Schmelze durch Zerfaserung hergestellt werden. Je nach Zusammensetzung der Schmelze unterscheidet man zwischen Glasfasern und Stein- bzw. Schlackenfasern. Die nachfolgende Tabelle zeigt die wesentlichen Unterschiede in den Zusammensetzungen.

| | Glasfaser Masse-% | Steinfaser Masse-% | Schlackenfasern Masse-% |
|---|---|---|---|
| SiO₂ | 55-70 | 41-53 | 38-53 |
| B₂O₃ | 3-12 | | |
| CaO | 5-13 | 10-25 | 20-43 |
| MgO | 0-5 | 6-16 | 4-14 |
| Al₂O₃ | 0-7 | 6-14 | 5-15 |
| K₂O | 0-2,5 | 0,5-2,5 | 0,5-2,5 |
| Na₂O | 13-18 | 1-3,5 | 0-1 |
| TiO₂ | 0-2,5 | 0,9-3,5 | 0,3-1 |
| FeO | | 3-8 | 0-2 |
| BaO | 0-3 | | |

Zur Herstellung von Glaswolle-Dämmstoffen dient eine Schmelze aus einer Mischung von Mineralien, welcher Chemikalien, wie Natrium-, Bariumcarbonat und Natriumsulfat beigefügt werden. Die Aufschmelzung erfolgt in der Praxis fast ausschließlich in Wannenöfen unterschiedlicher Ausführungen. Voraussetzung für einen solchen Betrieb sind Rohstoffe mit einem Kornspektrum von ≤ 3 mm.

Dahingegen werden Stein- und Schlackenwolle aus einem mineralischen Rohmaterial mit einer geeigneten Mischung oder geeigneter chemischer Zusammensetzung hergestellt, wie z. B. aus Diabas, Basalt oder Schlacke, die bei der Stahlherstellung anfällt. Zur Einstellung der Viskosität der Schmelze dienen Zuschlagstoffe wie Kalkstein oder Dolomit.

Das Erschmelzen der Gesteine erfolgt nahezu ausschließlich in Kupolöfen oder in einer Kombination aus einem Schachtofen und einem nachgeschalteten Elektroschmelzofen. Derartige Öfen sind in der Industrie allgemein bekannt.

Der Kupolofen stellt eine besondere Form eines Schachtofens dar. Er besteht aus einem senkrecht stehenden, meist doppelwandigen, wassergekühlten Stahlrohr, dessen unteres Ende durch einen demontierbaren Deckel geschlossen und der innen feuerfest ausgemauert ist. Die Beschickung mit dem Rohmaterial, einem Gemenge aus Roh- und Zuschlagstoffen, erfolgt von oben durch ein geeignetes Dosiersystem bzw. eine Dosiervorrichtung. Als Brennstoff wird überwiegend Koks verwendet. Der zur Verbrennung erforderliche Sauerstoff wird über im unteren Teil des Ofens angebrachte Düsen zugeführt. Dadurch werden in der unteren Schmelzzone Temperaturen von 1500^{o}C und darüber erzielt, so daß das in die Schmelzzone gelangende Gemisch aufgeschmolzen wird. Aufgrund der Wirkung der Schwerkraft sammelt sich die Gesteinsschmelze im unteren Ofenbereich an und wird über einen seitlich angebrachten Abstich einem Zerfaserungsaggregat zugeführt. Die bei der Aufschmelzung entstehenden Rauchgase werden über ein im oberen Teil des Kupolofens angebrachtes Rauchgasrohr einem nachgeschalteten Filter und anschließend einem Kamin zugeführt. Auf diese Weise dient das heiße Rauchgas zur Vorwärmung der über der Schmelze stehenden Rohstoffsäule.

Eine weitere Ausführungsform eines Schachtofens besteht aus einem allseitig feuerfest ausgemauerten Brennraum. In diesen werden über eine geeignete Zuführung im oberen Deckenbereich die Roh- und Zuschlagstoffe eingebracht, so daß sich ein Schüttkegel bildet. In den Seitenwänden des Schachtofens eingelassene Öl- oder Gasbrenner sind auf die Oberfläche des Rohstoffgemenges gerichtet. Dabei werden an der Oberfläche der Rohstoffe Temperaturen erzeugt, die oberhalb der Schmelztemperatur liegen. Auf Grund der Schwerkraft sammelt sich die Schmelze in einer ringförmig um den Schüttkegel im Ofenboden eingelassene Rinne. Die Schmelze wird über einen Abstich in einen Elektroschmelzofen geführt, in welchem die Schmelze auf eine Temperatur gebracht wird, die für die Zerfaserung der Schmelze benötigt wird.

Der Elektroschmelzofen besteht aus einer feuerfest ausgemauerten Wanne mit einem Deckel. Im Deckel sind Durchführungen angebracht, und zwar zum einen für die Einführung der Grafit-Elektroden und zum anderen zur Rohstoffdosierung. In der Regel arbeitet der Elektroschmelzofen im Widerstands-Modus. Die elektrische Energie wird über die Elektroden und den elektrischen Widerstand der Schmelze eingebracht. Die Rohstoffe werden kontinuierlich auf das Schmelzbad gleichmäßig aufgebracht und erschmolzen. Der dabei entstehende Energieverlust wird über die Elektroden ausgeglichen. Unterhalb des Schmelzspiegels befindet sich in der Seitenwandung der Wanne ein Abstich, über den die Schmelze einem Spinnaggregat zur Zerfaserung zugeführt wird.

Jedes der drei oben beschriebenen Schmelzsysteme benötigt stückige Roh- und Zuschlagstoffe. Der Kornbereich liegt beim Kupolofen zwischen 90 bis 200 mm, beim Schachtofen zwischen 90 bis 140 mm und beim Elektroofen zwischen 10 bis 32 mm. Das Rohgut muß vor allem deshalb stückig sein, damit die entstehenden Rauchgase durch die sich bildenden Hohlräume zwischen den Stücken hindurchtreten und nach oben hin abziehen können.

Das Erfordernis des stückigen Rohmaterials hat zur Folge, daß alle nicht stückig oder in zu kleinem Korn vorliegenden Zuschlagstoffe, Ingredienzien, die zur Korrektur der Schmelzzusammensetzung erforderlich sind, oder die für die Herstellung von Dämmstoffen geeigneten Sekundärrohstoffe kompaktiert werden müssen. Unter Sekundärrohstoffe sind alle diejenigen Rohstoffe zu verstehen, die zur Herstellung von Mineralwolle-Dämmstoffen wieder verwendet werden sollen. Das Kompaktieren gilt insbesondere für Mineralwolle-Dämmstoffe, die als Reststoffe bei der Herstellung von Mineralwolle-Produkten und bei der späteren Anwendung dieser Produkte anfallen oder die nach Gebrauch in den Herstellungsprozeß zurückgeführt werden sollen.

Es ist bekannt, dieses Problem der Kompaktierung auf dem Wege über die Herstellung von Kunststeinen zu lösen. Hierzu werden die Dämmstoffe mit Hilfe von Hammer- und / oder Schlagbalken-Mühlen zerkleinert, und zwar bis zu einer Flockengröße ≤ 3 mm. Diesen Flocken werden der Rohstoffabrieb, Feinkornabsiebungen, Schmelzperlen, die bei der Zerfaserung der Schmelze anfallen, und weitere bei der Herstellung von Mineralwolle anfallende feinkörnige Sekundärrohstoffe beigemischt. Diese Stoffe dienen im Kunststein gewissermaßen als Stützgerüst und verleihen dem Kunststein die für die Weiterverarbeitung nötige Festigkeit, damit die Kunststeine im Kupolofen bzw. im Schachtofen unter dem Druck der Charge oder auch schon während des Transportes und der Aufgabe in den Ofen nicht auseinanderfallen. Darüberhinaus können Zuschlagstoffe zur Korrektur der chemischen Zusammensetzung der Schmelze beigegeben werden, die also auch Bestandteile des Kunststeines sind. Zur Bindung wird üblicherweise Portlandzement verwendet. Das aufbereitete Gemisch wird in einem konventionellen Betonmischer, wie in Betonformsteinfabriken üblich, aufbereitet und in einer Formpresse zu Kunststeinen verpreßt. Die so gebildeten Rohlinge werden danach an der Luft oder in einem Autoklaven bis zur Erlangung der Endfestigkeit getrocknet. Diese Kunststeine können als Beimischung zu der Charge aus üblichem Rohmaterial eingesetzt werden.

Dieses Verfahren der Kompaktierung zu Kunststeinen ist außerordentlich aufwendig und langwierig. Da man den Anteil an Mineralwolle wegen der erforderlichen Festigkeit der Kunststeine von 10 bis 60 Masse-%, vorzugsweise 25 Masse-% beschränken muß, ist auch die Herstellung verhältnismäßig kostenaufwendig. Durch die Verwendung selbst von schwefelarmen Zement wird beim Aufschmelzen dieser Kunststeine SO₂ im Rauchgas gebildet. Kunststeine dieser Art bieten zwar den Vorteil, daß sie viskositätsvermindernd wirken, ähnlich wie der Zuschlagstoff Dolomit, jedoch weisen sie nur einen Glühverlust von etwa 8 Masse-% auf. Beim Dolomit liegt dieser Glühverlust bei etwa 40 Masse-%.

Ferner ist es aus der DE-C-1 002 923 bekannt, Gemenge in Glasschmelzofen oder Glasschmelz-Wannenofen einzulegen, wobei die Gemengechargen dosiert und nach dem Mischen der Rohstoffe sowie vor dem Transport zum Ofen und vor dem Einlegen in das Schmelzaggregat verpackt und in verpacktem Zustand in den Ofen bzw. die Wanne eingelegt werden. Als Packmittel können Verwendung finden alle Arten von Behältern oder Verpackungsformen, wie Säcke, Beutel, Schläuche, Kästen, Rohre, Fässer und Kugeln aus Natur- oder Kunststoff, Papier, Gewebe oder Glas der zu schmelzenden Glassorte, soweit sie nur aus einem Material bestehen, das bei der entsprechenden Glasschmelztempertur selbst verbrennt, verdampft oder schmilzt. Bei Verwendung von Glas als Packmittel versieht dieses Packmittel gleichzeitig die Funktion einer in jedem Falle notwendigen Scherbenvorlage.

Aus dieser Druckschrift ist jedoch nur bekannt, Primärrohstoffe und Zuschlagstoffe einzulegen. Hierbei handelt es sich um Färbungs- und Entfärbungsmittel für das zu schmelzende Glas, Schmelzfluß- oder Läuterungsmittel.

Ein gattungsgemäßes Verfahren, bei dem Kunststeine in eine silikatische Schmelze zur Herstellung von Mineralwollprodukten eingebracht werden, ist darüberhinaus aus der US-A-4 617 045 bekannt. Schließlich offenbart die US-A-5 073 183 einen Wannenofen, der zum Erschmelzen einer silikatischen Schmelze geeignet ist, wobei der Schmelze Kunststeine zugeführt werden.

Ausgehend von dem zuvor erläuterten Stand der Technik liegt der Erfindung die Aufgabe zu Grunde, ein Verfahren und einen Schmelzofen zur Herstellung einer silikatischen Schmelze zu schaffen, durch welches bzw. durch welchen alle Abfallstoffe bzw. Sekundärrohstoffe sowohl aus ökonomischer als auch aus ökologischer Sicht in einfacher Weise wieder gewonnen bzw. recycelt werden können.

Die gestellte Aufgabe wird erfindungsgemäß durch die Merkmale des Anspruchs 1 bzw des Anspruchs 12 gelöst.

Dadurch, daß Hohlgläser zum Füllen aller geeigneten Abfallstoffe verwendet werden, ergeben sich stückige Formkörper, wie sie bei der Beschickung von Schachtöfen bzw. Kupolöfen erforderlich sind. Die Verwendung von Hohlgläsern führt zu dem Vorteil, daß diese zur Reduzierung der Viskosität der Gesteinsschmelze und außerdem als Transportmittel für die Rückführung der Abfallstoffe dienen.

Da Hohlgläser gegenüber dem üblichen Gestein einen um etwa 700^{o}C niedrigeren Schmelzpunkt haben sicht die Erfindung, daß die befüllten Hohlgläser mit einem bestimmten Abstand von vorzugsweise etwa 0,5 bis 1 m über der Schmelzzone in die Charge eingeführt werden. Wenn eine größere Menge gefüllter Hohlgläser über die übliche obere Dosiervorrichtung eines Schmelzofens eingebracht würde, könnte dies nämlich wegen des zu frühen Schmelzens des Glases eine gewisse Abdichtung des Ofens zur Folge haben. Die Zwischenräume zwischen den Rohstoffstücken könnten mehr oder weniger durch das schmelzende Glas verschlossen und dadurch ein Überdruck im Ofenraum aufgebaut werden. Wenn dann noch der Sauerstoffdurchsatz auf diese Weise verringert oder unterbrochen würde, käme der Schmelzvorgang zum Erliegen oder würde zumindest verringert. Das Einbringen der Hohlgläser mit dem bestimmten Abstand vermeidet dieses Problem.

Zur Verwendung können alle Hohlgläser gelangen, wie sie in Glascontainern in Stadt und Land gesammelt werden und somit in ausreichenden Mengen als wiederverwendbarer Rohstoff, also als Sekundärrohstoff, vorhanden sind. Es ist bekannt, daß von diesen Abfall-Hohlgläsern nur ein kleiner Teil in den Herstellungsprozeß von Hohlgläsern rückgeführt werden kann, was z. B. an den unterschiedlichen Farben der Hohlgläser liegt. Dies hat zur Folge, daß im Laufe der Zeit sehr große Halden ungenutzten Hohlglases bei den Entsorgungsunternehmen vorhanden sind.

Hohlgläser haben eine chemische Zusammensetzung, wie sie beispielsweise nachfolgend angegeben ist.

| | Masse-% |
|---|---|
| SiO₂ | 72 |
| CaO | 10 |
| MgO | 4 |
| Al₂O₃ | 2 |
| Na₂o | 12 |

Ein Vorteil ist darin zu sehen, daß Glas, wenn es bereits einmal erschmolzen wurde, keinen Glühverlust besitzt, so daß sich dies positiv auf die ökonomische und ökologische Bilanz auswirkt.

Eine vorteilhafte Ausgestaltung der Erfindung ergibt sich dadurch, daß der Anteil der gefüllten Hohlgläser 5 bis 100%, vorzugsweise 25%, bezogen auf die gesamte Beschickung beträgt. Hieraus ergibt sich der Vorteil, daß eine Zugabe beispielsweise bis zu 25 Masseprozent, was etwa 2,5 t/h entspricht, zur Charge aus Basalt und Koks eine Schmelze mit einer Viskosität erzeugt, wie sie besonders gut auf den dem Schmelzofen nachgeschalteten Spinnmaschinen nach dem Zentrifugal-Kaskaden-Verfahren zu verarbeiten ist.

Durch Zugabe von Ingredienzien läßt sich die oben näher spezifizierte Schmelze so einstellen, daß sie sich nach dem Düsenblasverfahren verspinnen laßt.

Vorteilhafterweise werden als Hohlgläser Altglasflaschen oder -behälter eingesetzt. Unter Altglasbehältern sind Glasbehälter zu verstehen, in denen man z. B. Obst, Gemüse oder Wurstwaren aufbewahrt.

Als Abfallstoffe bzw. Sekundärrohstoffe werden bevorzugt wahlweise Mineralwolle, Schmelzperlen, Filterstäube oder Altglasscherben oder Mischungen dieser Stoffe eingefüllt. Den Abfallstoffen können zweckmäßigerweise Zuschlagstoffe und / oder Ingredienzien zur Korrektur der Schmelzzusammensetzung beigefügt werden.

Vorteilhafte Ausgestaltungen der Erfindung ergeben sich dadurch, daß die Abfallstoffe vor dem Befüllen der Hohlgläser derart zerkleinert und aufbereitet werden, daß sie riesel- und / oder stopffähig sind. Ferner ist von Vorteil, daß die Aufbereitung der Abfallstoffe derart vorgenommen wird, daß eine Rohdichte bzw. ein Raumgewicht von ≥ 400 kg/m³ gegeben ist. Desweiteren ist vorteilhaft, daß stückige Abfallstoffe bis zu einer Korngröße von ≤ 3 cm zerkleinert und Zuschlagstoffe bis zur Rieselfähigkeit gemahlen werden. Das Befüllen der Hohlgläser wird vorteilhafterweise unter einer Verdichtung im Verhältnis von etwa 2 : 1 Vorgenommen. Bei einer solchen Verdichtung verbleiben die Abfallstoffe in den Hohlgläsern und können während des Transportes und bei der Beschickung des Schmelzofens nicht wieder herausrieseln.

Je nach Art des zu befüllenden Abfallstoffes ist es in vielen Fällen vorteilhaft, daß nach dem Befüllen der Hohlgläser eine schnell abbindende Versiegelung, vorzugsweise durch Aufbringen von Wasserglas, vorgenommen wird.

Zum besseren Verständnis der Erfindung sei noch folgendes erläutert.

Der erfindungsgemäße Einsatz der Hohlgläser aus Altglas, insbesondere der Altglasflaschen, stellt eine Entlastung der Umwelt dar, und zwar nicht nur wegen der Wiedergewinnung des Altglases selbst, sondern auch weil hierdruch die Emissionen SO₂ und CO₂ während des Schmelzvorganges vergleichsweise sehr verringert werden. Darüberhinaus werden die Rohstoffvorkommen geschont und die Deponien entlastet. Ferner wird der spezifische Energieeinsatz bei der Mineralwolle-Herstellung deutlich verringert. Durch die Ausnutzung des Flaschenvolumens als Transportmittel für die Abfallstoffe, also die Sekundärrohstoffe und Zuschlagstoffe usw., läßt sich der kostenintensive Weg über die Herstellung von Kunststeinen weitestgehend vermeiden.

Zur Verdeutlichung seien noch folgende Beispiele angeführt.

Geht man von einer stündlichen Schmelzleistung des Schachtofens von etwa 8 bis 15 t, vorzugsweise 10 t, aus, so lassen sich vorteilhaft 2,5 t/h Altglas einsetzen. Setzt man das Altglas in Form ganzer Flaschen ein, so werden etwa 4000 Flaschen pro Stunde benötigt. Damt steht ein Volumen für die Rückführung von Abfallstoffen bzw. Sekundärrohstoffen 2800 l/h zur Verfügung. Wenn man dieses Volumen für die Rückführung aufbereiteter Mineralwolle-Dämmstoffe mit einer Rohdichte von 400 kg/m³ nutzt und wenn man davon ausgeht, daß beim Befüllen der Hohlgläser eine Verdichtung von etwa 2 : 1 erfolgt, so lassen sich 2,2 Tonnen pro Stunde zur Wiedergewinnung dieser Sekundärrohstoffe zurückführen.

Ein weiteres Beispiel soll den Vergleich mit dem Stand der Technik veranschaulichen. Beim bekannten Einsatz von 30% Kunststeinen mit einem Mineralwolle-Anteil von 25% lassen sich bei vergleichbarer Schmelzleistung 750 kg/h zurückführen bzw. wiedergewinnen. Soll der gleiche Prozentsatz an Altglas und Mineralwolle der Charge ersetzt werden wie beim Einsatz von Kunststeinen, so lassen sich 1,5 t/h Mineralwolle über Altglasflaschen entsorgen. Das ist also gegenüber der Entsorgung über Kunststeine die doppelte Menge.

Die Erfindung betrifft auch einen Schmelzofen, insbesondere Schachtofen oder Kupolofen, zur Durchführung der zuvor erläuterten Verfahren. Es wird von einem Schmelzofen ausgegangen, der mit einer oberen Dosiervorrichtung zur Beschickung mit stückigem Rohmaterial und stückigen Zuschlagstoffen versehen ist, der ferner eine mittlere Vorwarmzone und eine untere Schmelzzone aufweist. Aus dieser Schmelzzone wird die Schmelze mittels eines Abstiches einem Zerfaserungsaggregat zugeführt.

Der erfindungsgemäße Schmelzofen ist dadurch gekennzeichnet, daß am Ofenmantel im Abstand von etwa 0,5 bis 1 m oberhalb der Schmelzzone eine Vorrichtung zum Einführen von mit Abfallstoffen gefüllten Hohlgläsern vorgesehen ist.

Die zuvor genannte Vorrichtung besteht vorteilhafterweise aus mehreren gleichmäßig auf dem Umfang des Ofenmantels verteilten Rohren, welche außerhalb des Ofenmantels mit Zellenradschleusen versehen sind, so daß die Rohre ständig gasdicht abgeschlossen sind.

Zur Verbesserung und Erleichterung des Einfüllvorganges wird ferner vorgeschlagen, daß die Rohre radial zu dem Ofenmantel und unter einem Winkel von etwa 30 Grad bis 60 Grad nach außen ansteigend angeordnet sind. Es versteht sich, daß auch diese Rohre feuerfest ausgemauert werden sollten.

Während im zuvor erläuterten Ausführungsbeispiel die jeweilige Zellenradschleuse den Abschluß des Dosierungsrohres bildet, kann es von Vorteil sein, einen pneumatisch oder hydraulisch oder elektrisch angetriebenen Stempel derart in das Dosierungsrohr einzuführen, daß er den äußeren Abschluß bildet. In diesem Fall wird die Zellenradschleuse oberhalb des Dosierungsrohres an dieses angeschlossen, so daß die Zufuhr der Hohlglasbehälter von oben in das Dosierungsrohr erfolgt, wobei der Stempel diese in Richtung Schmelzzone drückt. Bei dieser Ausführung können die Dosierungsrohre unter einem Winkel von 90^{o} zum Ofenmantel, d. h. im wesentlichen horizontal angebracht werden. Die Hublänge des Stempels ist auf die jeweilige Dosierungsrohrlänge abgestimmt.

Im Niveau des Eintritts der gefüllten Hohlgläser in den Schmelzofen herrschen in diesem Temperaturen von etwa ≥ 1100^{o}C. Die Hohlgläser und zum Teil auch die darin enthaltenen Abfallstoffe werden hier schnell aufgeschmolzen, so daß diese aufgeschmolzenen Bestandteile an der inneren Ofenwandung aufgrund der Schwerkraft herunterfließen, um sich mit der Gesteinsschmelze in der Schmelzzone zu vereinigen bzw. zu vermischen. Auf diese Weise wird also mit Sicherheit ein Zusetzen des Schmelzofens ausgeschlossen. Die Art der Beschickung des Schmelzofens gilt sowohl für Schachtöfen als auch für Kupolöfen.

Es versteht sich, daß für die oben beschriebenen Hohlgläser bzw. Altglasflaschen möglichst intakte Hohlbehälter zu verwenden sind. Die geeigneten Hohlgläser bzw. Altglasflaschen können in der Praxis aus einem Gemenge von Altglas durch Absiebung gewonnen werden. Die abgesiebten Glasscherben können dann selbstverständlich auch recycelt bzw. wiedergewonnen werden, indem sie, wie oben beschrieben, entsprechend zerkleinert und als Abfallstoffe beigegeben werden. Die intakten Hohlgläser werden dann einer Abfülleinrichtung zugeführt. Die Dosierung erfolgt zweckmäßigerweise pneumatisch. Die Hohlgläser bzw. Altglasflaschen können auf einer geeigneten Fördervorrichtung hintereinander und auch nebeneinander aufgereiht werden. Die Befüllung mit Abfallstoffen erfolgt mit einer Einfüllvorrichtung mit einem Vorratsbehälter, der einen trichterförmigen Auslauf aufweist. Das untere Ende des trichterförmigen Auslaufes kann dabei zylindrisch ausgebildet werden. Das Volumen ist dem jeweiligen Füllgut angepaßt und beträgt für aufbereitete Mineralwolle beispielsweise 1,4 l. Das untere zylindrische Ende kann nach dem unteren Ende zu konisch zusammenlaufen, so daß eine rüsselähnliche Öffnung gebildet wird. Dieses Einfüllorgan ist zweckmäßigerweise so ausgebildet, daß es den Durchmesser von sogenannten Europaflaschen besitzt und außerdem auch in sogenannten Weithalsflaschen hineinpaßt. Während des Füllvorganges wird die Einfüllöffnung auf den Flaschenhals aufgesetzt oder in den Flaschenhals eingeführt, im letzteren Falle beispielsweise bei Weithalsflaschen. Ein im Vorratsbehälter konzentrisch angeordneter pneumatisch angetriebener Stempel ist bei dieser Füllvorrichtung so angeordnet, daß er das Füllgut aus dem Vorratsbehälter in die betreffende Altglasflasche eindrückt. Wie oben beschrieben, erfolgt im Falle der aufgearbeiteten Mineralwolle eine Verdichtung im Verhältnis von 2 : 1. Nachdem der Stempel zurückgefahren ist, kann neues Füllmaterial in den Vorratsbehälter unter der Schwerkraft nachrutschen. Der Füllvorgang kann durch Aufbringen leichter Vibrationen unterstützt werden. Im Zuge dieses Füllvorganges ist es von Vorteil, daß die Altglasflaschen bzw. Hohlgläser nach dem Befüllen mit schnellabbindendem Wasserglas versiegelt werden, so daß die eingefüllten Abfallstoffe auch beim Stürzen der Hohlgläser bzw. Altglasflaschen nicht herausrieseln können. Zu diesem Versiegeln kann eine handelsübliche Befülleinrichtung verwendet werden, die der ersteren nachgeschaltet ist. Von hier aus werden die Hohlgläser bzw. Altglasflaschen über ein Transportband der oder den Zellenradschleusen am Schmelzofen zugeführt.

In der Zeichnung sind Ausführungsbeispiele von erfindungsgemäßen Vorrichtungen im Schema dargestellt, und zwar zeigen
- Fig. 1: ein im Schnitt dargestelltes Dosierungsrohr, welches an den Schmelzofen angeschlossen ist und am äußeren Ende eine Zellenradschleuse aufweist,
- Fig. 2: einen Vertikalschnitt durch ein anderes Dosierungsrohr mit aufgesetzter Zellenradschleuse und einem Einschubstempel und
- Fig. 3: eine perspektivische Ansicht einer Einfüllvorrichtung zum Hohlglas füllen.

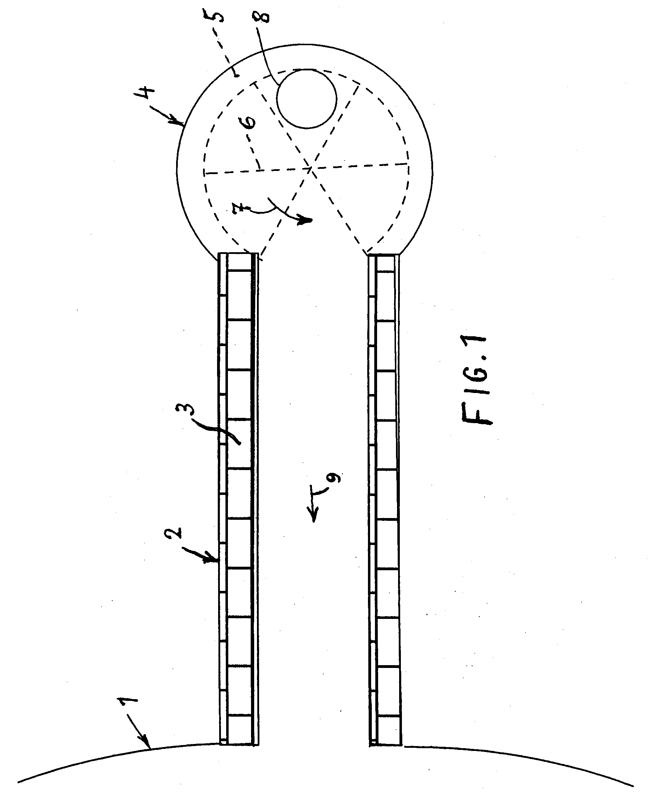

Gemäß Fig. 1 ist mit dem Bezugszeichen 1 ein Teil der Ofenwandung eines Schmelzofens bezeichnet. In bekannter und nicht dargestellter Ausführung ist der Schmelzofen mit einer feuerfesten Ausmauerung versehen. An einer radialen Öffnung in dieser Ausmauerung und in der Ofenwandung ist ein Dosierungsrohr 2 fest angeschlossen, welches ebenfalls mit einer Ausmauerung 3 versehen ist. Am äußeren Ende des Dosierungsrohres 2 ist eine Zellenradschleuse 4 angebracht. Im Innern der Wandung 5 der Zellenradschleuse befindet sich ein Zellenrad 6, welches um eine im wesentlichen vertikale Achse beispielsweise in Richtung des Pfeiles 7 drehbar ist, und zwar durch einen nicht gezeichneten Antrieb. Die von der Drehachse radial verlaufenden Zellenwände sind anzahlmäßig so ausgestaltet, daß das Dosierungsrohr 2 nach außen hin ständig gasdicht abgeschlossen ist. In dem von dem äußeren Ende des Dosierungsrohres abliegenden Bereich besitzt die Zellenradschleuse eine Einzelöffnung für die mit Abfallstoffen gefüllten Hohlgläser 8. Durch Drehung des Zellenrades gelangen die Hohlgläser nacheinander in das Dosierungsrohr 2. Da das Dosierungsrohr vom Schmelzofen nach außen um einen Winkel von etwa 30 bis 60^{o} ansteigt bzw. nach dem Schmelzofen hin ein entsprechendes Gefälle aufweist, rutschen die gefüllten Hohlgläser in Richtung des Pfeiles unter der Schwerkraft bis in den Schmelzofen.

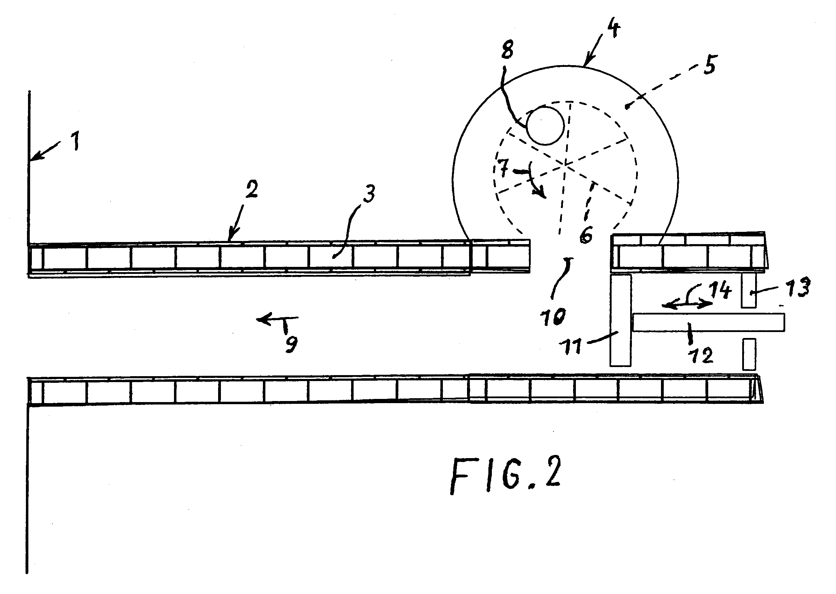

Fig. 2 zeigt ein anderes Ausführungsbeispiel einer Dosiervorrichtung, bei der für gleiche oder gleichartige Bauteile die gleichen Bezugszeichen wie in Fig. 1 verwendet worden sind. Bei diesem Ausführungsbeispiel besitzt das Dosierungsrohr 2 im oberen Bereich eine Einfüllöffnung 10, an die die Zellenradschleuse 4 angeschlossen ist. Bei entsprechender Drehung des Zellenrades 6 fallen die gefüllten Hohlgläser durch die Einfüllöffnung 10 in das Innere des Dosierungsrohres 2 und werden sodann von einem Einschubstempel 11 in Richtung des Pfeiles 9 ins Innere des Schmelzofens zwangsweise geschoben. Es versteht sich, daß die in einer Stangenführung 13 geführte Schubstange 12 des Einschubstempels 11 wesentlich länger als dargestellt ausgebildet und am äußeren Ende mit einem entsprechenden Antrieb verbunden ist, der den Einschubstempel 11 und die Schubstange 12 in Richtung des Pfeiles 14 taktweise hin- und herbewegt. Damit während des Verschiebevorganges keine Hohlgläser hinter den Einschubstempel 11 gelangen können, wird das Zellenrad 6 während dieses Vorganges angehalten. Eine andere Möglichkeit besteht darin, daß zwischen der Zellenradschleuse 4 und dem Dosierungsrohr 2 eine nicht gezeichnete Sammelkammer vorgesehen wird, die dann am unteren Ende während des Verschiebevorganges durch einen nicht gezeichneten Schieber abgeschlossen wird, so daß die Zwischenkammer erst dann wieder geöffnet wird, wenn sich der Einschubstempel 11 wieder in der Stellung gemäß Fig. 2 befindet.

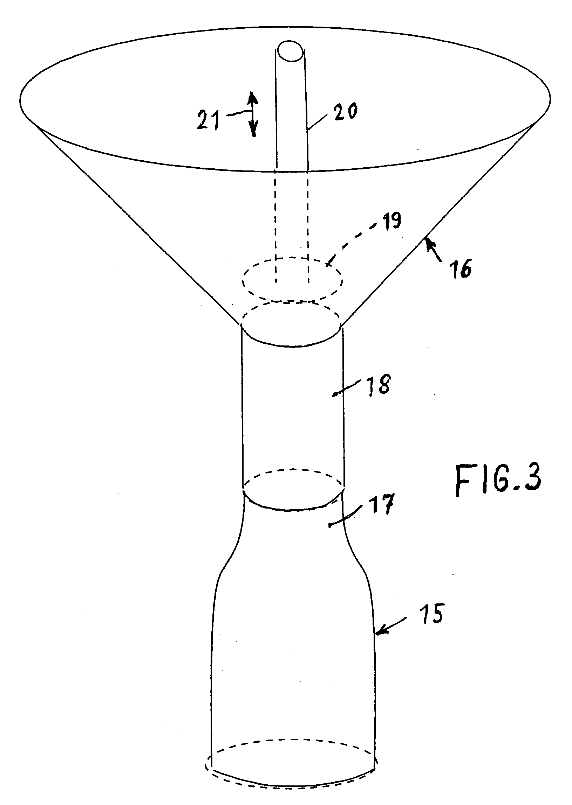

Fig. 3 veranschaulicht rein schematisch eine Einfüllvorrichtung zum taktweisen Füllen der Hohlgläser 15 mit Abfallstoffen. Die Hohlgläser 15 stehen auf einer nicht gezeichneten Fördervorrlchtung, die die Hohgläser taktweise unter die Einfüllvorrichtung bringt. Die Einfüllvorrichtung besitzt einen Einfülltrichter 16, der mit Abfallstoffen gefüllt werden kann. Wenn sich der Auslauf 18 des Einfülltrichters beispielsweise über dem Flaschenhals 17 befindet, können die Abfallstoffe mittels eines Stempels 19 und einer angetriebenen Stempelstange 20 taktweise in Richtung des Pfeiles 21 in die Flasche bzw. das Hohlglas eingeführt und gleichzeitig zusammengepreßt werden.

## Patentansprüche

1. Verfahren zur Herstellung von Mineralwolle-Dämmstoffen aus einer silikatischen Schmelze, die aus einer Charge mit stückigem, über eine obere Dosiervorrichtung zur Beschickung zugeführtem Rohmaterial in einem eine mittlere Vorwärmzone und eine untere Schmelzzone aufweisenden Schmelzofen (1) erschmolzen und einem Zerfaserungsgerät zugeführt wird, wobei der Schmelze schmelzbare Abfallstoffe als Sekundärrohstoffe zugeführt werden,
**dadurch gekennzeichnet**,
daß die als Sekundärrohstoffe zuzuführenden Abfallstoffe in Hohlglaser (8,15) gefüllt und anschließend der Charge zugeführt werden, wobei die befüllten Hohlgläser (8,15) mit einem Abstand über der Schmelzzone eingeführt werden, bei dem die Hohlgläser (8,15) die Schmelze im im wesentlichen nicht geschmolzenen Zustand erreichen, welcher Abstand vorzugsweise etwa 0,5 bis 1 m über der Schmelzzone angeordnet ist.

2. Verfahren nach Anspruch 1, dadurch gekennzeichnet, daß der Anteil der gefüllten Hohlgläser (8,15) 5 bis 100% vorzugsweise 25%, bezogen auf die gesamte Beschickung beträgt.

3. Verfahren nach Anspruch 1 oder 2, dadurch gekennzeichnet, daß als Hohlgläser (8,15) Altglasflaschen oder - behalter eingesetzt werden.

4. Verfahren nach einem der vorhergehenden Ansprüche, dadurch gekennzeichnet, daß als Abfallstoffe wahlweise Mineralwolle, Schmelzperlen, Filterstäube oder Altglasscherben oder Mischungen dieser Stoffe eingefüllt werden.

5. Verfahren nach Anspruch 2, dadurch gekennzeichnet, daß das Zerfasern der Schmelze nach dem Düselblasverfahren vorgenommen wird.

6. Verfahren nach Anspruch 4, dadurch gekennzeichnet, daß den Abfallstoffen Zuschlagstoffe und / oder Ingredienzien zur Korrektur der Schmelzzusammensetzung beigemischt werden.

7. Verfahren nach einem der vorhergehenden Ansprüche, dadurch gekennzeichnet, daß die Abfallstoffe vor dem Befüllen der Hohlgläser (8,15) derart zerkleinert und aufbereitet werden, daß sie riesel- und / oder stopffähig sind.

8. Verfahren nach Anspruch 6 oder 7, dadurch gekennzeichnet, daß die Aufbereitung der Abfallstoffe derart vorgenommen wird, daß eine Rohdichte bzw. ein Raumgewicht ≥ 400 kg/m³ gegeben ist.

9. Verfahren nach einem der vorhergehenden Ansprüche, dadurch gekennzeichnet, daß stückige Abfallstoffe bis zu einer Korngröße ≤ 3 cm zerkleinert und Zuschlagstoffe bis zur Rieselfähigkeit gemahlen werden.

10. Verfahren nach einem der vorhergehenden Ansprüche, dadurch gekennzeichnet, daß beim Befüllen der Hohlglaser (8,15) eine Verdichtung im Verhältnis ≥ 2 : 1 vorgenommen wird.

11. Verfahren nach einem der vorhergehenden Ansprüche, dadurch gekennzeichnet, daß nach dem Befüllen der Hohlgläser (8,15) eine schnellabbindende Versiegelung, vorzugsweise durch Aufbringen von Wasserglas, vorgenommen wird.

12. Schmelzofen, insbesondere Schachtofen oder Kupolofen, zur Durchführung des Verfahrens nach einem der vorhergehenden Ansprüche, mit einer oberen Dosiervorrichtung zur Beschickung mit stückigem Rohmaterial und Zuschlagstoffen, einer mittleren Vorwärmzone und einer unteren Schmelzzone, aus welcher die Schmelze mittels eines Abstiches einem Zerfaserungsaggregat zuführbar ist, dadurch gekennzeichnet, daß am Ofenmantel (1) im Abstand von etwa 0,5 bis 1 m oberhalb der Schmelzzone eine Vorrichtung (2-6, 10-12) zum Einführen von mit Abfallstoffen gefüllten Hohlgläsern (8,15) vorgesehen ist.

13. Schmelzofen nach Anspruch, 12, dadurch gekennzeichnet, daß die Vorrichtung (2-6, 10-12) aus mehreren gleichmäßig auf dem Umfang des Ofenmantels (1) verteilten Rohren (2) besteht, welche außerhalb des Ofenmantels (1) mit Zellenradschleusen (4) versehen sind, so daß die Rohre (2) ständig gasdicht abgeschlossen sind.

14. Schmelzofen nach Anspruch 13, dadurch gekennzeichnet,daß die Rohre (2) radial zu dem Offenmantel (1) und unter einem Winkel von etwa 30 Grad bis 60 Grad nach außen ansteigend angeordnet sind.

15. Schmelzofen nach Anspruch 13, dadurch gekennzeichnet, daß die Rohre (2) radial und unter einem Winkel von etwa 90^{o} zum Ofenmantel (1) angeordnet sind, und daß der Gasdichte-Abschluß durch einen pneumatisch oder hydraulisch oder elektrisch angetriebenen Stempel (11) gebildet wird, der das Schmelzgut in Richtung Schmelzzone befördert.

16. Schmelzofen nach Anspruch 15, dadurch gekennzeichnet, daß die Zellenradschleuse (4) so auf dem Mantel des betreffenden Rohres (2) angebracht ist, daß die Zuführung des Schmelzgutes unmittelbar in den Aktionsbereich des Stempels (11) eingeführt wird.

## Claims

1. Method of producing mineral wool insulating materials of a silicate melt which is melted from a batch comprising lumpy raw material supplied to a melting furnace (1) via an upper dozing apparatus for charging, said melting furnace having a central pre-heating zone and a lower melting zone, and which silicate melt is supplied to a defibration unit, with meltable waste materials being added to said melt as secondary raw materials,
**characterized in**
that said waste materials to be supplied as secondary raw materials are filled in hollow glasses (8, 15) and thereafter are supplied to said batch, wherein said filled hollow glasses (8, 15) are introduced at a distance above the melting zone, at which distance said hollow glasses (8, 15) reach the melt in a substantially non-melted condition, said distance being provided at approximately 0.5 to 1 m above the melting zone.

2. Method according to claim 1, characterized in that the portion of filled hollow glasses (8, 15) amounts to 5 to 100%, preferably 25%, referred to the total load.

3. Method according to claim 1 or 2, characterized in that salvaged glass bottles or containers are used as hollow glasses (8, 15).

4. Method according to one of the preceding claims, characterized in that mineral wool, shots, filter dusts or salvaged glass cullets or mixtures thereof are selectively used as waste materials.

5. Method according to claim 2, characterized in that the defibration of the melt is effected according to the Dusel blowing method.

6. Method according to claim 4, characterized in that the waste materials are admixed additives and/or ingredients for the correction of the melt composition.

7. Method according to one of the preceding claims, characterized in that the waste materials, prior to the filling of the hollow glasses (8, 15), are comminuted and prepared in a manner such that the same are pourable and/or stuffing.

8. Method according to claim 6 or 7, characterized in that the preparation of the waste materials is effected in such a way that a bulk density or a volume weight ≥ 400 kg/m³ is given.

9. Method according to one of the preceding claims, characterized in that lumpy waste materials are comminuted up to a grain size ≤ 3 cm and that additives are ground up to pourability.

10. Method according to one of the preceding claims, characterized in that at the filling of the hollow glasses (8, 15) a compacting is effected in a ratio ≥ 2 : 1.

11. Method according to one of the preceding claims, characterized in that after the filling of the hollow glasses (8, 15) a rapid-hardening sealing is effected, preferably by applying water glass.

12. A melting furnace, particularly a shaft furnace or cupola furnace, for carrying out the method according to one of the preceding claims, comprising an upper dosing apparatus for charging lumpy raw material and additives, a central preheating zone and a lower melting zone, from which lower melting zone the melt can be supplied to a defibration unit by means of a tapping action, characterized in that on the furnace shell casing (1) a means (2-6, 10-12) for introducing hollow glasses (8, 15) filled with waste materials is provided at a distance of approximately 0.5 to 1 m above the melting zone.

13. Melting furnace according to claim 12, characterized in that said means (2-6, 10-12) consists of plural tubes (2) equally distributed on the periphery of the furnace shell casing (1), which tubes (2) are provided externally of the furnace shell casing (1) with cellular wheel sluices (4), so that said tubes (2) are permanently sealed in a gas-tight manner.

14. Melting furnace according to claim 13, characterized in that said tubes (2) are arranged radially relative to the furnace shell casing (1) and so as to be outwardly ascending under an angle of approximately 30 degrees to 60 degrees.

15. Melting furnace according to claim 13, characterized in that said tubes (2) are arranged radially and under an angle of approximately 90^{o} relative to the furnace shell casing (1), and that the gas-tight sealing is formed by a pneumatically or hydraulically or electrically driven gusset (11) that conveys the material to be melted towards the melting zone.

16. Melting furnace according to claim 15, characterized in that the cellular wheel sluice (4) is mounted on the jacket of the respective tube (2) in such a manner that the delivery of the material to be melted is introduced immediately into the action range of said gusset (11).

## Revendications

1. Procédé pour la production de matériaux isolants en laine minérale à partir d'une masse fondue silicieuse qui est fondue à partir d'une charge avec du matériau brut en morceaux, amené par un dispositif de dosage par en haut pour le chargement dans un four à fusion (1) qui présente une zone de préchauffage au milieu et une zone de fusion inférieure et qui est amenée à un appareil de broyage, des déchets fusibles étant amenés en tant que matériaux bruts secondaires à la masse fondue,
caractérisé en ce
que les déchets qui doivent être amenés en tant que matériaux bruts secondaires sont remplis dans des verres creux (8, 15) et sont ensuite amenés à la charge, les verres creux remplis (8, 15) étant introduits au-dessus de la zone de fusion avec un écartement pour lequel les verres creux (8, 15) atteignent la masse fondue dans un état substantiellement non fondu, lequel écartement est situé de préférence à environ 0,5 à 1 m au-dessus de la zone de fusion.

2. Procédé selon la revendication 1, caractérisé en ce que le taux des verres creux remplis (8, 15) est de 5 à 100 %, de préférence de 25 %, par rapport à l'ensemble de la charge.

3. Procédé selon la revendication 1 ou 2, caractérisé en ce que des bouteilles de verre de récupération ou des récipients en verre de récupération sont utilisés comme verres creux (8, 15).

4. Procédé selon l'une des revendications précédentes, caractérisé en ce que comme déchets, on remplit au choix de la laine minérale, des perles de verre, des poussières de filtre ou des débris de verre de récupération ou des mélanges de ces matériaux.

5. Procédé selon la revendication 2, caractérisé en ce que le broyage de la masse fondue est effectué selon le procédé de soufflage par buse de tuyère.

6. Procédé selon la revendication 4, caractérisé en ce que des agrégats et/ou ingrédients sont mélangés aux déchets pour corriger la composition de la masse fondue.

7. Procédé selon l'une des revendications précédentes, caractérisé en ce que les déchets sont broyés et traités avant de remplir les verres creux (8, 15) de telle manière qu'ils puissent s'écouler par ruissellement et/ou être bourrés.

8. Procédé selon la revendication 6 ou 7, caractérisé en ce que le traitement des déchets est effectué de telle manière qu'il y ait une masse volumique apparente ou un poids spécifique ≥ 400 kg/m³.

9. Procédé selon l'une des revendications précédentes, caractérisé en ce que des déchets en morceaux sont broyés jusqu'à une grosseur de grain ≤ 3 cm et que des agrégats sont moulus jusqu'à être capables de ruisseler.

10. Procédé selon l'une des revendications précédentes, caractérisé en ce que lors du remplissage des verres creux (8, 15) un compactage selon le rapport ≥ 2 : 1 est effectué.

11. Procédé selon l'une des revendications précédentes, caractérisé en ce qu'après le remplissage des verres creux (8, 15) un scellement à prise rapide est effectué, de préférence en appliquant du verre soluble.

12. Four à fusion, en particulier four vertical ou cubilot, pour exécuter le procédé selon l'une des revendications précédentes, avec un dispositif de dosage par en haut pour le chargement avec du matériau brut en morceaux et des agrégats, une zone de préchauffage au milieu et une zone de fusion inférieure à partir de laquelle la masse fondue peut être amenée à un appareil de broyage au moyen d'une coulée, caractérisé en ce qu'un dispositif (2-6, 10-12) pour introduire des verres creux (8, 15) remplis de déchets est prévu sur la paroi du four (1) à un écartement d'environ 0,5 à 1 m au-dessus de la zone de fusion.

13. Four à fusion selon la revendication 12, caractérisé en ce que le dispositif (2-6, 10-12) est constitué par plusieurs tuyaux (2) répartis uniformément sur la périphérie de la paroi du four (1), tuyaux qui sont pourvus, au-dessus de la paroi du four (1), d'écluses à roues cellulaires (4) si bien que les tuyaux (2) sont constamment obturés étanches au gaz.

14. Four à fusion selon la revendication 13, caractérisé en ce que les tuyaux (2) sont placés radialement par rapport à la paroi du four (1) et en formant un angle d'environ 30 degrés à 60 degrés en montant vers l'extérieur.

15. Four à fusion selon la revendication 13, caractérisé en ce que les tuyaux (2) sont placés radialement et en formant un angle d'environ 90° par rapport à la paroi du four (1) et que la fermeture d'étanchéité au gaz est formée par un poinçon (11), entraîné pneumatiquement ou hydrauliquement ou électriquement, qui transporte les matières à fondre en direction de la zone de fusion.

16. Four à fusion selon la revendication 15, caractérisé en ce que l'ècluse à roue cellulaire (4) est fixée sur l'enveloppe du tuyau concerné (2) de telle manière que l'amenée des matières à fondre est introduite directement dans la zone d'action du poinçon (11).
